# EUROPEAN PATENT APPLICATION

(11) **EP 2 868 720 A1**
(43) Date of publication of application: **06.05.2015**
(21) Application number: 14157413.7
(22) Date of filing: 03.03.2014
(51) Int. Cl.: C09D 11/08

(54) **Printing ink with nitrated lignin ester as binder component**

(30) Priority: 01.11.2013 US 201361898518 P
(71) Applicant: Siegwerk Druckfarben AG & Co. KGaA, 53721 Siegburg (DE)
(72) Inventor: Caes, Benjamin, West Des Moines, 50265 (US); Rivas, Manuel, Clive, 50325 (US); Noirot, Pierre-Antoine, 74800 Arenthon (FR)
(74) Representative: Hepp Wenger Ryffel AG

(57) **Abstract**

The present invention is related to a printing ink or overprint varnish comprising a nitrated lignin ester as at least one binder component, to a process for preparing said printing ink or overprint varnish, as well as to the use of a nitrated lignin ester as a binder component in a printing ink or overprint varnish.

## Description

The present invention is related to printing inks, in particular to a flexographic ink or a gravure ink, comprising a nitrated lignin ester as at least one binder component.

### Background of the invention

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5th ed. 1993, p, 33-53. Also the characteristics of gravure and flexographic inks are known to the skilled man. Reference may be made, for example, to Leach/Pierce (Eds.), The printing ink manual, Blueprint, London, 5th ed. 1993, p, 473-598. The respective content of those chapters is incorporated herein by reference. It should be understood, however, that for the purposes of the present invention gravure and flexographic printing are only preferred embodiments, and that the statements made herein generally apply to any printing process for color development where nitrocellulose has been commonly used as a binder component, typically as the sole binder component.

One main binder component for printing inks, in particular gravure and flexographic inks, is nitrocellulose. Nitrocellulose is a hard resin that provides a good dispersing medium for grinding pigments. Inks comprising nitrocellulose as a binder medium exhibit high scuff and heat resistance, good blocking behavior and good cohesive strength for lamination applications. However, nitrocellulose is extremely flammable and explosive in the dry state. Thus, nitrocellulose is not easy to handle. Moreover, the solubility of nitrocellulose is dependent on its nitrogen content and may thus vary depending on the source of the material.

While several synthetic binder components for printing inks, such as gravure and flexographic inks, are known, for environmental reasons it would be desirable to use at least as a portion of the binder component a renewable material. Since packaging materials frequently undergo thermal treatment for, e.g., sealing, pasteurization or sterilization purposes after their manufacture, such binder material would also have to show good thermal resistance in order to be suitable as a component in gravure and flexographic inks.

Lignin is a biopolymer occurring in plants, such as wood. It consists of phenolic macromolecules with varying structure and is renewable. Industrially, it is obtained as a by-product of the paper-making process. Alkaline lignin or ligninsulfonates may be obtained by the known Kraft process (sulphate process) and/or the sulfite process. These processes as well as the lignin products obtained thereby are well-known in the art and do not have to be discussed here in detail.

During the last two decades, alkaline lignin from the Kraft process has been used as such in some applications, including as tackifier and antioxidant for rubber compounds, in wood composites by replacing a part of phenolic resins with lignin in a phenol-formaldehyde resin formulation, or in degradable plastic polymeric blends. Lignin derivatives such as sulfomethylolated lignins have been used in specific compositions for reducing the water content of a concrete mixture. Ligno-phenol derivatives are used in molded resin compositions. In WO 02/18504 A2, the use of sulfonated and/or sulfomethylated lignins as a dispersing agent in aqueous dye preparations for ink jet printing is described.

There have been disclosures on the use of lignins from the above Kraft or sulfite process as binder component in printing inks. Reference is made to the following patents from Westvaco Corp.: US-5,192,361; US-5,188,665; US-4,957,557; US-4,891,070; US-6,045,606; US-4,892,587; US-4,612,051. It has to be noted, however, that those old patents have never matured into a commercial printing ink comprising lignin as a binder component. Apparently, those formulations did not show sufficient properties for being an alternative to nitrocellulose as binder component in gravure and flexographic inks. In particular, lignin has a very dark color making it not suitable for most printing ink applications.

In US-4,612,051, the use of lignin acetate as binder component in printing inks was suggested. According to said document, lignin acetate has an acceptable color for printing ink applications.

In EP-2 620 480 A1, the use of nitrated lignin as a binder component for printing inks was described.

However, lignin esters or nitrated lignin still do not show optimum characteristics as binder component for printing inks. In particular, their solubility in some common solvent systems of solvent-based printing inks, in particular alcohol/ester blends commonly used in, e.g., flexographic printing, is still not satisfactory.

### Object of the invention

It was an object of the present invention to provide a printing ink, in particular a gravure printing ink or a flexographic printing ink, or an overprint varnish, comprising a binder component which at least in part comprises a renewable material having desired characteristics, such as improved solubility characteristics.

### Summary of the invention

According to various embodiments of the present invention, the above object has been solved by a printing ink or an overprint varnish comprising at least one binder component comprising a nitrated lignin ester.

Thus, in a first aspect the present invention is related to a printing ink, in particular a gravure printing ink or a flexographic printing ink, or an overprint varnish comprising a nitrated lignin ester according to the present invention as at least one binder component.

In a further aspect, the present invention is related to a process for preparing a printing ink or an overprint varnish, the process comprising:
mixing a nitrated lignin ester with additional components comprising
at least one additional binder component,
at least one colorant,
at least one solvent and
optionally, additives.

In a further aspect, the present invention is related to the use of a nitrated lignin ester according to according to the present invention for preparing a printing ink, in particular a gravure printing ink or a flexographic printing ink, or an overprint varnish according to the present invention.

In a further aspect, the present invention is related to the use of a printing ink according to the present invention for applying an ink layer onto a substrate, preferably in a gravure or a flexographic printing process.

In a still further aspect, the present invention is related to the use of an overprint varnish according to the present invention for applying a varnish layer onto a substrate.

In a still further aspect, the present invention is furthermore related to an article, in particular a rigid and flexible packaging or a label, comprising a cured layer from a printing ink or an overprint varnish of the present invention

### Detailed description of the invention

According to the present invention, the term "nitrated lignin ester" defines a product which is obtained from lignin by esterification and nitration. For example, nitrated lignin ester according to the present invention can be obtained from alkaline lignin which is the product of the above described Kraft process. Basically, in the Kraft process lignin-containing biomaterial is treated with mineral acids without the application of heat.

A sample structure of lignin is shown below:

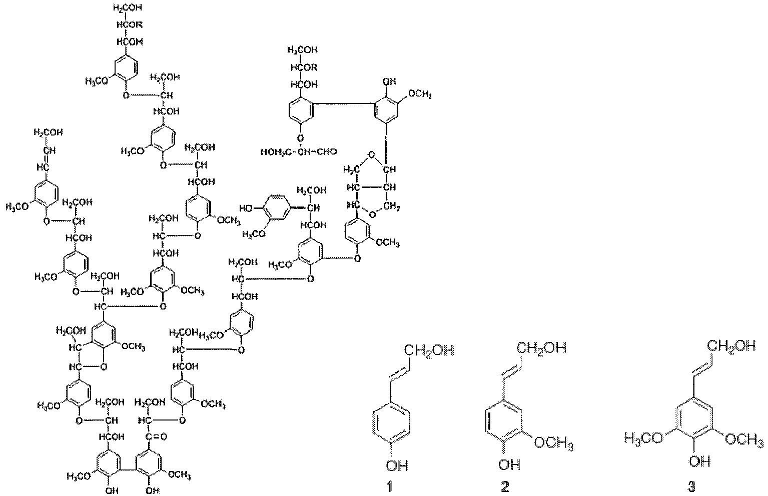

The units 1, 2 and 3 represent phenyl propane monomers that can be found in lignin: 1) p-coumaryl alcohol; 2) coniferyl alcohol; 3) syingyl alcohol.

According to the present invention, it is preferred to use an alkaline lignin which has been prepared according to the method described in WO 2007/12440 A2 (Greenvalue S.A.). The content of WO 2007/12440 A2 is incorporated herein by reference. Basically, lignin from ,e.g., the above described Kraft process is subjected to a chemo-thermomechanical treatment involving mechanical shear at a maximum temperature of about 100-220°C and a pressure of about 0,5 to 10 atmospheres in the presence of an additive such as a glycol which lowers the softening point of the lignin. Such alkaline lignins are commercially available as a dry powder under the trade name Protobind sold by ALM India.

An exemplary lignin suitable for preparing the nitrated lignin esters of the present invention is sold under the commercial name Protobind^{™} 2000 or Protobind^{™} 2400. It has a softening temperature of about 130°C, and is insoluble in an aqueous medium having a pH of 7 or less. However, it is highly soluble in an aqueous medium having a pH higher than 7. This is a big difference to conventional lignins, which are generally poorly soluble. The water solubility of the commercial products of the Protobind series varies. However, also other commercially available lignins from, for example, ALM India, Mead-Westvaco or Flambeau River paper may be used.

According to the present invention, the nitrated lignin ester is preferably obtained from lignin by esterification and subsequent nitration.

According to the present invention, any suitable esterification of lignin known from the art may be used. However, it is preferred that the lignin starting material is reacted with a respective carboxylic anhydride in stoichiometric amounts for achieving the desired degree of esterification, in the presence of a catalyst.

According to the present invention, the esterification is preferably performed using a an anhydride of a C1-8 carboxylic acid, preferably an anhydride of a C2-6 carboxylic acid, and most preferably acetic acid anhydride, propionic acid anhydride, or butyric acid anhydride. It should be noted, however, that esterification could also be performed using the respective carboxylic acids or carboxylic acid halogenides (e.g., acid halides), for example.

A catalyst can be used for the esterification reaction. Any catalyst conventionally used for such esterification reactions may be used for the present invention. Preferably, a metal catalyst such as zinc is used. Most preferred are zinc granules.

According to the present invention, the term "about" as used herein can allow for a degree of variability in a value or range, for example, within about 10%, within about 5%, or within about 1% of a stated value or of a stated limit of a range.

According to the present invention, the term "degree of esterification" defines the percentage of hydroxy groups present in the lignin starting material which are converted into ester groups in the course of the above esterification reaction of the present invention. According to the present invention, it is preferred that during the above described esterification reaction a degree of esterification is reached where half or the majority of hydroxyl groups of the lignin starting material, preferably about 50 to about 100%, more preferably about 70 to about 100%, of the hydroxyl groups have reacted.

The esterification reaction according to the present invention is preferably carried out in a suitable solvent, preferably butyl acetate.

The esterification reaction can be carried out under conventionally used conditions, preferably under stirring for 2 to 24 h, preferably 2 to 10 h, at a temperature of 50 to 150°C, preferably 100 to 150 °C.

The reaction product can be then purified by separating, preferably decanting, the reaction mixture from the catalyst and washing with a suitable solvent, preferably an alkane such as n-hexane. The washing step may be conducted several times in order to increase the purification.

The thus obtained lignin ester can be subjected to nitration, for example by a nitration process similar to the one described in GB-866, 968. The lignin ester is suspended in an organic liquid which is inert to nitric acid at least under cooling conditions such as, e.g., 0°C or lower, such as carbon tetrachloride (CCl₄), carbon disulphide (CS₂), methylene dichloride (CH₂Cl₂), or ethyl acetate, preferably ethyl acetate, and subsequently reacted with nitric acid (HNO₃) at a temperature not exceeding 28°C in order to avoid oxidative degradation. Preferably, concentrated HNO₃ ("fuming" nitric acid) is used. According to the present invention, the nitration is preferably carried out under stirring for 0.5 to 10 h, preferably 1 to 5 h, at a temperature of -10 to +10°C, preferably -5 to +5°C.

According to the present invention, the term "degree of nitration" defines the percentage of the sites present in the lignin ester susceptible to nitration, to which in the course of the above nitration reaction of the present invention nitro groups are attached. Preferably, the sites in the lignin ester molecule which are susceptible to nitration are located at the aromatic ring moiety of phenolic groups of the lignin ester, preferably in meta position to a hydroxy group or an ether group, as well as free hydroxy groups in the lignin ester. According to the present invention, it is preferred that a degree of nitration in the range of about 1 to about 100%, preferably in the range of about 50 to about 100% and most preferably in the range of about 75 to about 100%, is reached.

The nitrated lignin ester of the present invention comprises a structure with ester groups derived from hydroxy groups of lignin, nitric acid ester groups and nitro-group containing aromatic moieties.

The nitrated lignin esters of the present invention may vary in their degree of nitration and esterification and in their molecular weight. Thus, one further aspect of the present invention is related to a nitrated lignin ester as described above, characterized in that the nitrated lignin ester has a degree of esterification where half or the majority of hydroxyl groups of the lignin starting material, preferably about 50 to about 100%, more preferably about 70 to about 100%, of the hydroxyl groups have reacted, and a degree of nitration in the range of about 1 to about 100%, preferably in the range of about 50 to about 100% and most preferably in the range of about 75 to about 100%.

According to the present invention, it has been found that solubility of the nitrated lignin esters in common solvents can be improved by adjusting a specific degree of esterification and a specific degree of nitration in the nitrated lignin ester. Generally, an increased degree of esterification and an increased degree of nitration leads to improved solubility of the resulting nitrated lignin esters. Particularly preferred embodiments of the present invention are nitrated lignin esters having a degree of esterification of about 50% to about 100% in combination with a degree of nitration of about 100%, and nitrated lignin esters having a degree of esterification of about 75 to about 100% in combination with a degree of nitration of about 75%.

The degree of esterification and the degree of nitration obtained in the method of the present invention can be, for example, adjusted by varying the stoichiometric ratios of the starting materials, or by varying the reaction conditions, as known to a skilled man.

According to the present invention, it has been found that the suitability of the thus obtained nitrated lignin ester can be improved if, after the usual work-up procedure involving the removal of the solvent and washing, preferably several times, with a suitable solvent, preferably an alkane such as n-hexane, the reaction product is furthermore subjected to washing with water. Preferably, the reaction product is mixed with water and stirred for 2 to 20 h, and subsequently filtered off the water and dried.

It has been found that by means of said washing step the odor and color of the product can be reduced. By said washing steps by-products or starting materials having a distinct odor, such as butyric acid, butyric anhydride and nitric acid, as well as by-products or starting materials having a distinct color can be significantly removed from the reaction product.

It should be noted that the present invention is not limited to nitrated lignin esters which are obtained by the above method. Other methods for preparing nitrated lignin esters may also be applied. For example, nitration may also be carried out with a mixture of concentrated sulphuric acid (H₂SO₄) and concentrated nitric acid under cooling and stirring in an organic solvent. According to the present invention, any method for nitrating lignin ester is suitable which does not lead to an undesirable degree of oxidative degradation and which yields to a soluble nitrated lignin.

The nitrated lignin esters are soluble in a variety of solvents, such as acetone, methyl ethyl ketone, ethanol, or isopropanol. In particular, the nitrated lignin ester of the present invention exhibits highly improved solubility in alcohol/ester blends which are the solvent mixtures typically used in flexographic or gravure inks. Thus, the nitrated lignin esters of the present invention are very suitable as binder component in a printing ink, in particular a gravure printing ink or a flexographic printing ink.

The present invention is related to the use of a nitrated lignin ester of the present invention as binder component in a printing ink, in particular a gravure printing ink or a flexographic printing ink, or in an overprint varnish.

The present invention is furthermore related to a printing ink, in particular a gravure printing ink or a flexographic printing ink, or an overprint varnish comprising a nitrated lignin ester according to the present invention as at least one binder component.

It has been found that the nitrated lignin esters of the present invention have a profile of characteristics which enable them to partly or completely replace nitrocellulose, i.e. the standard binder component in gravure printing inks or flexographic printing inks or overprint varnishes. Thus, the present invention is preferably related to a printing ink or overprint varnish as described above, wherein the binder may additionally comprise nitrocellulose as binder component, wherein the ratio of nitrated lignin ester and nitrocellulose in the binder is in the range of 100:0 to 0.1:99.9, preferably in the range of 50:50 to 5:95.

In particular, the nitrated lignin esters of the present invention are compatible with the majority of pigments (i.e. good pigment grinding characteristics) and other binder resins conventionally used in printing inks, preferably gravure printing inks or flexographic printing inks. As described above, nitrocellulose is flammable and explosive in the dry state. The nitrated lignin esters of the present invention do not explode when heated at about 175°C (such as nitrocellulose), but decompose slowly with much less release of energy. Thus, the printing inks of the present invention which comprise no nitrocellulose or a significantly reduced amount of nitrocellulose are better to handle than conventional printing inks comprising nitrocellulose as the sole binder and thus in much higher amounts.

For various applications it is preferred to use the nitrated lignin ester component (alone or in combination with nitrocellulose) together with other binders. It has been found that the nitrated lignin esters of the present invention show good compatibility with binder resins conventionally used in printing inks, preferably gravure or flexographic inks, or in overprint varnishes, in particular with polyurethane resins, acrylic resins, maleic resins or polyamide resins. Examples of compatible resins are the polyurethane resins of the applicant, described for example in EP-1 229 090 A1, EP-1 357 141 A1, EP-1 361 236 A1, EP-1 493 762 A1, EP-1 496 072 A1, or EP-1 496 071 A1. Preferably used polyurethane resins are commercially available under the trade names Neorez (Neorez R 1000, Neorez 1010), KPlast (KPlast 1022, KPlast 1035, KPlast 1039, KPlast 1055), KFilm (KFilm 2010, KFilm 2070, KFilm 2072" KFilm 2073, KFilm 2086) or Versamid (Versamid 2011).

Preferably used polyamide resins are commercially available under the trade names Unirez (Unirez 110, Unirez 2223, Unirez 2224, Unirez 2228, Unirez 2238, Unirez 2940), Versamid (Versamid 971, Versamid 959, Versamid 917, Versamid 725, Versamid 728, Versamid 744, Versamid 754, Versamid 757, Versamid 759, Versamid 930, Versamid 940, Versamid 972, Versamid 973), Eurelon (Eurelon 957) and Flexrez (Flexrez 1074,Flexrez 1084, Flexrez 1155).

Preferably used acrylic resins are commercially available under the trade names Neocryl BT-20, Paraloid B66, Paraloid B67, Dianal BR-101, Morez 101, Dianal BR-107, Dianal BR-116, Neocryl B700, Elvacite 2013, Elvacite 2043, Carboset 526, Carboset 527, Joncryl 587, and Joncryl 611. Preferably used maleic resins are commercially available under the trade names Teckro AF128, Filtrez 530, Filtrez 591, Pentalyn 830, Amberyl 830, Erkamar 1065, Bremasin 1780, Erkamar 3260, Auroren 3505, Sylvprnt 7097, Sylvprnt 8112, Sylvprnt 8190, Sylvprnt 8200, and Unirez 8170.

The ratio of nitrated lignin ester component to other binder components to be used depends upon the ink properties to be achieved and can be accordingly readily established by a skilled person. The ratio may be limited by compatibility of the nitrated lignin component to other binder components.

The nitrated lignin esters may be used in the printing inks of the present invention as a pigment binder, in particular for cyan pigments, or alternatively as a binder in a varnish, such as an over-print varnish.

According to the present invention, the printing ink furthermore comprises a colorant, preferably a pigment. According to the present invention any pigment which is typically used in flexographic or gravure inks such as monoazo yellows (e. g. CI Pigment Yellows 3,5,98); diarylide yellows (e. g. CI Pigment Yellows 12,13,14); Irgalite Blue, Pyrazolone Orange, Permanent Red 2G, Lithol Rubine 4B, Rubine 2B, Red Lake C, Lithol Red, Permanent Red R, Phthalocyanine Green, Phthalocyanine Blue, Permanent Violet, titanium dioxide, carbon black, etc, may be used. Exemplary pigments are White 6, Red 122, Red 57:1, Yellow 14, Yellow 83, Orange 5, Red 2, Red 48:2, Green 7, Blue 15:4, Violet 23, Violet 1, Acidic black 7, and Alkaline black 7.

The pigment is typically employed in amounts of from about 5 to about 60 wt.-%, preferably about 10 to about 60 wt.-%, based on the weight of the ink composition.

According to the present invention, the amounts given for the individual components of an ink base, varnish or printing ink are understood such that the combination of all components sums up to 100 wt.-%

According to a preferred embodiment of the present invention, the pigment is combined with the binder material (the nitrated lignin ester of the present invention alone or in combination with another binder, preferably nitrocellulose) and solvent by any convenient method, of the preparation of an ink base. Thus, the pigment is provided in form of a dispersion in the nitrated lignin ester. Dispersion of the pigment in the nitrated lignin ester can be carried out, for example, by milling methods. Examples are ball mill, sand mill, horizontal media mill, high-shear fluid flow mill, or the like. A typical pigment dispersion according to the present invention comprises a solution of the nitrated lignin esters in solvents such as ethanol, ethyl acetate, N-propyl acetate, n- Butyl acetate, Isopropyl acetate, n-Propanol, Isopropanol, or mixtures thereof, in combination with the pigment and optionally additional solvents (which may be the same as for the solution of the nitrated lignin ester).

According to the present invention, the ink base preferably comprises the pigment typically in amounts of from about 5 to about 60 wt.-%, preferably about 10 to about 60 wt.-%, more preferably about 20 to about 40 wt.-%, based on the weight of the ink base. Furthermore, the ink base preferably comprises the binder (the nitrated lignin ester of the present invention alone or in combination with another binder, preferably nitrocellulose) typically in amounts of from about 10 to about 50 wt.-%, preferably about 10 to about 40 wt.-%, more preferably about 20 to about 30 wt.-%, based on the weight of the ink base. Furthermore, the ink base preferably comprises the solvents typically in amounts of from about 30 to about 70 wt.-%, preferably about 40 to about 60 wt-%, based on the weight of the ink base. Optional additives conventionally used in such ink bases may also be employed.

The thus obtained ink base is subsequently mixed with a so-called technical varnish. According to the present invention, it is preferred that an amount of about 30 to about 70 wt.-%, preferably about 40 to about 65 wt.-% of the above ink base is mixed with an amount of about 70 to about 30 wt.-%, preferably about 60 to about 35 wt.-% of a technical varnish.

The technical varnish to be used according to the present invention comprises the other components needed in a gravure or flexographic ink. Thus, in the technical varnish according to the present invention there are solvents, preferably selected from the group mentioned above for the ink base, binder components, for example polyamide or polyurethane resins, and additives such as fillers, surfactants, varnishes, wax, adhesion promoters, plasticizer and the like. The exact composition of a technical varnish of the present invention depends upon the specific requirements imposed on the printing ink, and may be readily adjusted by a skilled man. The composition of suitable technical varnishes for gravure or flexographic printing inks is known to a skilled person and described, for example, in Leach (Pierce (eds.), The printing ink manual, 5th ed., Blueprint, 1993, p. 473-599.

According to a preferred embodiment of the present invention, the printing ink comprises about 1 to about 10 wt.-% of one or more additives, based on the weight of the ink composition.

The printing inks of the present invention may be prepared like conventional printing inks, respectively, by mixing the individual components with each other under appropriate conditions.

The overprint varnishes of the present invention may be prepared like conventional overprint varnishes, respectively, by mixing the individual components with each other under appropriate conditions.

Thus, the present invention is also related to a process for preparing a printing ink or an overprint varnish, comprising the step of mixing a nitrated lignin ester according to the present invention with additional components, such as at least one additional binder component, at least one colorant, at least one solvent and optionally additives. In the case of an overprint varnish, no colorant is added.

The present invention is also related to the use of a printing ink according to the present invention for applying an ink layer onto a substrate, preferably in a gravure or a flexographic printing process.

The present invention is furthermore related to the use of an overprint varnish according to the present invention for applying a varnish layer onto a substrate.

The application of the printing ink onto a substrate is preferably carried out by a flexographic or gravure printing process. The application of the overprint varnish on the substrate is preferably carried out by a conventional coating process commonly used for applying varnishes onto a substrate.

The gravure printing process and the flexographic printing process are known to the skilled man and need not be described here in detail.

The substrate may be selected from a wide range of substrates commonly provided with ink or varnish layers. According to the present invention, the substrate may be selected from polymer substrates such as polyethylene or polypropylene or polyethylene terephthalate polymers, or may be a paper substrate.

The printing inks obtainable according to the present invention are suitable for a wide range of applications. In particular, they are suitable for all rigid and flexible packaging and labels in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g., soap packaging, hair care packaging, baby care packaging, feminine care packaging, male care packaging), home care packaging (e.g., detergent packaging, cleaner packaging), agricultural packaging (e.g., herbicide packaging, pest control packaging, fertilizer bags), industrial packaging (e.g.,_shopping bags, construction wrappers and bags), and pet care packaging (e.g., pet food bags, pet medical packaging, pet hygiene packaging).

Such packagings and labels are known in the art and need not be discussed in detail here.

Thus, the present invention is furthermore related to an article, in particular a rigid and flexible packaging or a label, comprising a cured layer from a printing ink or an overprint varnish of the present invention.

The present invention is furthermore related to a process for preparing an article, in particular a rigid and flexible packaging or a label, comprising the steps of applying printing ink or an overprint varnish according to claim 1 onto said article and curing said printing ink or overprint varnish.

### Examples

The present invention will now be further explained on the basis of non-limiting examples.

### Example 1: Synthesis of nitrated lignin ester

100 g sulphur-free lignin were suspended in a mixture of butyl acetate (250 ml) and butyric anhydride (140 g). Zinc pellets (20 mesh, 50 g) were added, and the reaction mixture was stirred vigorously. The reaction mixture was heated to reflux conditions at 120 °C under vigorous stirring, and kept under those conditions for 3 h. Thereafter, the reaction mixture was decanted from the zinc and transferred into a beaker, where the reaction mixture was allowed to cool to room temperature (20-25°C), washed with hexane and dried. Lignin butyrate was obtained as a pure product.

100g of the thus obtained lignin butyrate was dissolved in ethyl acetate (250 ml), cooled to 0°C and stirred vigorously. To said reaction mixture, 50 ml fuming nitric acid (HNO₃) were added dropwise. After complete addition of the nitric acid, the reaction mixture was stirred at 0°C for a further 3 h. Thereafter, the reaction mixture was poured into a beaker, and ethyl acetate was removed by applying a stream of compressed air for 1 h. The resulting reaction mixture was washed with hexane, thereby recovering nitrated lignin butyrate. The nitrated lignin butyrate was put into water and stirred overnight (12 h) to remove any residual acid. The product was then separated from the water and dried, thus yielding nitrated lignin butyrate.

The degree of esterification and nitration was determined by elemental analysis. Elemental analysis results (%C, %H, %N) were acquired using a PE 2100 Series II combustion analyzer (Perkin Elmer Inc.). The elemental analysis gave the following result: 57.71% C, 4.95% H, 3.48% N.

In addition, the product was evaluated using FT-IR analysis (Fourier transformation infrared analysis). The degree of esterification was additionally evaluated using ³¹P NMR analysis. Here, the amount of remaining unreacted hydroxyl groups was evaluated as follows: a solvent mixture of 7.2 ml pyridine and 4.0 ml deuterated chloroform was prepared. A mixture solution of 25 mg cyclohexanol (internal standard), 18 mg chromium acetylacetone (relaxing agent) and 5.0 ml of solvent mixture was prepared. The ³¹P NMR was then performed on a mixture of 25 mg lignin, 0.400 ml solvent solution, 0.150 ml mixture solution, and 0.070 ml 2-chloro-1,3,2-dioxaphospholane (phosphorylating agent). The NMR was collected at room temperature with a 25 second delay between scans, 64 scans in total. The lignin starting material had a hydroxyl content of ~3.7 mmol/g. The nitrated lignin ester obtained in said example had a hydroxyl content of about 0.3-0.6 mmol/g.

The thus obtained nitrated lignin butyrate was used in the formulations of example 3. According to the same protocol, also other nitrated lignin esters such as nitrated lignin propionate were obtained.

### Example 2

The solubility of nitrated lignin butyrate was compared with the solubility of the lignin starting material (Protobind^{™} 2400). The evaluation was performed by comparing Hansen solubility parameters. Hansen solubility parameters and their determination are known in the art (e.g. C. Hansen (ed.), Hansen Solubility parameters - A user's guide, CRC Press, Boca Raton, 2nd ed. 2007, in particular chapter I, the respective content is incoporated herein by reference). Hansen solubility parameters were estimated by the solubility of each lignin in 25 solvents, listed in Table 1. The solubility was scored as "1" for completely soluble, "2" for partially soluble, and "3" for insoluble. The solubilities were the input for the Hansen Solubility Parameter in Practice software (http://hansen-solubility.com/index.html) which computed a Hansen solubility sphere for each lignin.

**Table 1**

| **Solvent** | **δ_{D}** | **δ_{P}** | **δ_{H}** |
|---|---|---|---|
| Acetic Anhydride | 16.0 | 11.7 | 10.2 |
| Acetone | 15.5 | 10.4 | 7.0 |
| Acetonitrile | 15.3 | 18.0 | 6.1 |
| 1-Butanol | 16.0 | 5.7 | 15.8 |
| Butyl Acetate | 15.8 | 3.7 | 6.3 |
| Butyric Acid | 15.7 | 4.8 | 12.0 |
| Chloroform | 17.8 | 3.1 | 5.7 |
| Cyclohexane | 16.8 | 0.0 | 0.2 |
| Diethyl Ether | 14.5 | 2.9 | 4.6 |
| Dimethyl Formamide (DMF) | 17.4 | 13.7 | 11.3 |
| Dimethyl Sulfoxide (DMSO) | 18.4 | 16.4 | 10.2 |
| 1,4-Dioxane | 17.5 | 1.8 | 9.0 |
| Ethanol | 15.8 | 8.8 | 19.4 |
| Ethyl Acetate | 15.8 | 5.3 | 7.2 |
| Heptane | 15.3 | 0.0 | 0.0 |
| Hexane | 14.9 | 0.0 | 0.0 |
| Methanol | 14.7 | 12.3 | 22.3 |
| Methyl Ethyl Ketone (MEK) | 16.0 | 9.0 | 5.1 |
| Methylene Dichloride | 17.0 | 7.3 | 7.1 |
| 1-Propanol | 16.0 | 6.8 | 17.4 |
| 2-Propanol | 15.8 | 6.1 | 16.4 |
| Propyl Acetate | 15.3 | 4.3 | 7.6 |
| Styrene | 18.6 | 1.0 | 4.1 |
| Tetrahydrofuran (THF) | 16.8 | 5.7 | 8.0 |
| Toluene | 18.0 | 1.4 | 2.0 |

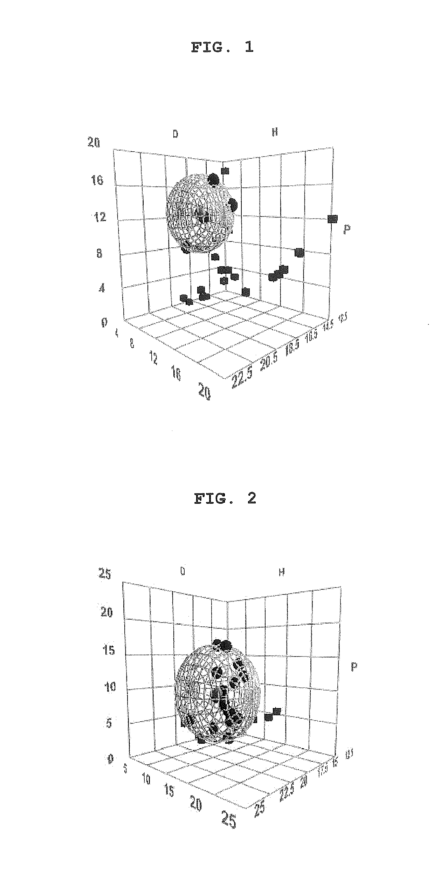

The Hansen solubility sphere for lignin starting material and nitrated lignin butyrate (100% esterification and 100% nitration) computed with Practice software are shown in figures 1 (lignin) and 2 (lignin butyrate, 100% nitration, 100% esterification). The Hansen Solubility Parameter in Practice software produced a mesh 3-D representation of the solubility sphere for each lignin in space defined by the Hansen solubility parameters. Spheres represent good solvents. Cubes represent poor solvents.

**Table 1: Hansen solubility parameters**

| | **δ_{D}** | **δ_{P}** | **δ_{H}** | **radius** |
|---|---|---|---|---|
| Lignin | 17.6 | 9.9 | 5.5 | 9.3 |
| lignin butyrate, 100% nitration, 100% esterification | 18.2 | 9.1 | 8.1 | 7.6 |

Increased degree of nitration and butyration increased the solubility in tested solvents. Whereas for the lignin starting material only 4 good solvents were determined, in the case of lignin butyrate (100% nitration, 100% esterification) 11 good solvents were determined.

### Example 3: Preparation of ink base

An ink was prepared as follows: The components given in tables 2 and 3 below were mixed with each other together with conventional grinding aids in a bucket. If necessary, the size of the pigment was reduced by stirring the mixture for about 10 minutes. Subsequently, the mixture was put into a mill and ground until no further improvement of the gloss (as determined with a microgloss 60° from BYK-Gardner) of the mixture could be observed.

**Table 2**

| | Example 2a (Comparative) | Example 2b | Example 2c |
|---|---|---|---|
| nitrocellulose varnish (35% solids in 25% n-propanol, 15% isopropanol, 25% butyl acetate) | 22 g | 20.9 g | 17.6 g |
| nitrolignin butyrate varnish (35% solids in 40% n-propanol, 25% butyl acetate) | | 1.1 g | 4.4 g |
| n-propanol | 35.8 g | 35.8 g | 35.8 g |
| butyl acetate | 16.2 g | 16.2 g | 16.2 g |
| red 57:1 pigment | 26 g | 26 g | 26 g |

**Table 3**

| | Example 3a (Comparative) | Example 3b | Example 3c | Example 3d |
|---|---|---|---|---|
| nitrocellulose varnish (35% solids in 25% n-propanol, 15% isopropanol, 25% butyl acetate) | 20 g | 18 g | 14 g | |
| nitrolignin butyrate varnish (35% solids in 40% n-propanol, 25% butyl acetate) | | 2 g | 6 g | 20 g |
| n-propanol | 37.4 g | 37.4 g | 37.4 g | 37.4 g |
| butyl acetate | 12.6 g | 12.6 g | 12.6 g | 12.6 g |
| blue 15:4 pigment | 30 g | 30 g | 30 g | 30 g |

### Example 4: Preparation of ink composition

60 wt.-% of the ink bases prepared according to Example 3 were mixed with 40% of a technical varnish according to Table 4 under stirring.

**Table 4 (technical varnish)**

| | Example 4a | Example 4b | Example 4c |
|---|---|---|---|
| solvent components | 17.55 g | 28.7 g | 40.0 g |
| varnish components | 73.75 g | 55.0 g | 49.8 g |
| silicone | 0.8 g | | |
| wax | 3.0 g | 3.8 g | |
| slip agent | 4.9 g | 2.5 g | |
| adhesion promoter | | 10.0 g | 8.5 g |
| plasticizer | | | 1.7 g |

### Gloss test

Gloss was determined with a microgloss 60° from BYK-Gardner. The following results were obtained:

**Table 5 (results of gloss test)**

| | 60 wt% ink from Example 3a | Ink from Example 3b | Ink from Example 3c | Ink from Example 3d |
|---|---|---|---|---|
| 40 wt% varnish from Example 4a | 69.0 | 66.9 | 61.0 | Not determined |
| Varnish from Example 4b | 71.1 | 70.7 | 69.1 | Not determined |
| Varnish from Example 4c | 89.1 | 89.0 | 87.4 | Not determined |

All tested examples exhibit high gloss.

### Ice water crinkle test

An ink sample was prepared and dried. The dried ink sample was put into water and kept in a refrigerator for 16 h. Subsequently, the ink sample was put into a freezer for 30 minutes, then removed and crinkled between both hands for 10 seconds, first gently and then more vigorously. The crinkled sample was evaluated for ink pick and/or flaking. If the ink flakes off or picks more than 5% of the entire amount of ink, the test is considered as failure.

**Table 6 (results of ice water crinkle test)**

| | Ink from Example 3a | Ink from Example 3b | Ink from Example 3c | Ink from Example 3d |
|---|---|---|---|---|
| Varnish from Example 4a | pass | pass | pass | pass |

### Block resistance test

An ink sample was prepared and folded on top of itself, so that the ink surface was in contact with the backside of the film. The folded sample was placed between two glass plates that had 1" x 1" rubber blocks. The edges of the glass plates were taped together, and the thus obtained specimen was either maintained at room temperature or heated to 50°C for subsequent testing (each specimen was tested both at room temperature and at 50°C). At both temperatures, the test was conducted by placing an 10 lb weight on top of the plates and leaving the sample for 16 h. After 16 h, the weight was removed, and the sample was removed from the glass plates. The folded sample was carefully unfolded and evaluated for the presence of any ink pick, ink transfer of cling. The test was considered as pass if there was only little or no cling and no ink pick or ink transfer.

**Table 7 (results of block resistance test)**

| | Ink from Example 3a | Ink from Example 3b | Ink from Example 3c | Ink from Example 3d |
|---|---|---|---|---|
| Varnish from Example 4a | pass | pass | pass | pass |
| Varnish from Example 4b | pass | pass | pass | pass |
| Varnish from Example 4c | pass | pass | pass | pass |

### Heat resistance test

An ink sample was prepared and placed between a folded piece of AL foil The thus obtained specimen was placed between the jaws of a heat sealer preheated to a determined temperature with the ink side toward the heated jaw (top bar). At each temperature, the specimen was tested for 0.5 s at a pressure of 40 psi. The ink sample was then removed and evaluated for any cling of ink to the Al foil, as well as for any ink transfer to the foil. The test was considered as pass if there was no cling and no ink transfer. The test was repeated for rising temperatures until failure occurred.

**Table 8 (results of heat resistance test)**

| | Ink from example 3a | Ink from example 3b | Ink from example 3c | Ink from example 3d |
|---|---|---|---|---|
| Varnish from example 4b | Pass at 450°C | Pass at 450°C | Pass at 450°C | Pass at 450°C |

### Lamination bond strength test

Laminations were done by making samples of inks (made by combining 60% of the respective ink base with 40% of a polyurethane varnish) on various substrates. Data was gathered by using a chemical coated PET substrate. The ink was applied using a hand proofer to 2/3 the length of the substrate. Then a conventional white ink formulation was applied to another 2/3 of the substrate such that 1/3 was ink only, 1/3 was ink backed by white, and 1/3 was white only. A conventional adhesive formulation (solvent-based (SB), solvent-less (SL) or water-based (WB)) was then applied to the ink at a given coating weight. The adhesive was dried and then a chemical coated PE film was applied on top of the adhesive such that the treated side of the PE film touched the adhesive. This specimen was then run through a laminator at 120 °C and the laminates were rolled around a cardboard core and allowed to cure for two weeks. After curing, a strip was cut from each laminate made and the bond strengths were determined. Bonds were pulled using an Instron Serial # 4443 bond puller and bond strengths were recorded in g. To pull bonds, half of the length of the printed component of the laminate strip was backed with tape and the bond pulled with the value recorded. If no tearing occurred, the other, non-tape backed half of the laminate strip was pulled for bond strength. If no tearing occurred, this value was recorded over the first, tape backed value. If tearing did occur, the tape backed value was kept with results indicating as such (T/).

**Table 9 (results of lamination bond strength test)**

| **Ink bases combined with technical varnish 4c** | | | | |
|---|---|---|---|---|
| In from example | 3a | 3b | 3c | 3d |
| Lamination bond strength (SB adhesive) | D | D | E | T/F |
| Lamination bond strength (SL adhesive) | T/E | T/H | T/I | T/G |
| Lamination bond strength (WB adhesive) | B | F | F | T/M |
| Lamination bond strength (SB adhesive)-white back | T/G | D | T/G | T/L |
| Lamination bond strength (SL adhesive)-white back | T/F | T/F | T/H | F |
| Lamination bond strength (WB adhesive)-white back | A | C | C | F |

Explanation of test results:
T/ = tape backed G = 301-350 g
T = tear H = 351-400 g
A = 0-50 g I = 401-450 g
B = 51-100 g J = 451-500 g
C = 101-150 g K = 501-550 g
D = 151-200 g L = 551-600 g
E = 201-250 g M = 601-650 g
F = 251-300 g

## Claims

1. A printing ink or overprint varnish, comprising:
at least one binder component comprising a nitrated lignin ester.

2. The printing ink according to claim 1, wherein the ink comprises a gravure printing ink or a flexographic printing ink.

3. The printing ink or overprint varnish according to claim 1, wherein said nitrated lignin ester is derived from lignin by esterification and nitration.

4. The printing ink or overprint varnish according to claim 1, wherein said nitrated lignin ester has a degree of esterification wherein half or the majority of hydroxyl groups of the lignin starting material are esterified, and a degree of nitration of about 1% to about 100%.

5. The printing ink or overprint varnish according to claim 1, wherein said nitrated lignin ester 1) has a degree of esterification of about 50% to about 100% in combination with a degree of nitration of about 100%, or 2) has a degree of esterification of about 75% to about 100% in combination with a degree of nitration of about 75%.

6. The printing ink or overprint varnish according to claim 1, wherein the ester of said nitrated lignin ester is chosen from acetate, propionate and butyrate.

7. The printing ink or overprint varnish according to claim 1, wherein said binder component further comprises nitrocellulose, wherein the ratio of nitrated lignin ester and nitrocellulose in the binder component is about 100:0 to about 0.1:99.9.

8. The printing ink or overprint varnish according to claim 11, wherein the ratio of nitrated lignin ester and nitrocellulose in the binder component is about 50:50 to about 5:95.

9. The printing ink or overprint varnish according to claim 1, further comprising at least one additional binder.

10. The printing ink or overprint varnish according to claim 13, wherein the additional binder is chosen from a polyurethane resin and a polyamide resin.

11. The printing ink or overprint varnish according to claim 1, further comprising a colorant comprising a pigment.

12. The printing ink or overprint varnish according to claim 1, further comprising a solvent and optionally further comprising additives.

13. A process for preparing a printing ink or an overprint varnish, the process comprising:
mixing a nitrated lignin ester with additional components comprising
at least one additional binder component,
at least one colorant,
at least one solvent and
optionally, additives.

14. A process for preparing an article comprising a rigid and flexible packaging or a label, the process comprising:
applying the printing ink or overprint varnish according to claim 1 onto said article and curing said printing ink or overprint varnish.

15. An article comprising a rigid and flexible packaging or a label, the article comprising:
a cured layer derived from the printing ink or overprint varnish according to claim 1.

16. An article according to claim 19, wherein said article is a rigid and flexible packaging chosen from food packaging, pharmaceutical packaging, personal hygiene packaging, home care packaging, agricultural packaging, industrial packaging, pet care packaging, and combinations thereof.
